# EUROPÄISCHE PATENTANMELDUNG

(11) **EP 4 074 616 A1**
(43) Veröffentlichungstag der Anmeldung: **19.10.2022**
(21) Anmeldenummer: 21196300.4
(22) Anmeldetag: 13.09.2021
(51) Int. Cl.: B65D 1/26

(54) **BECHER UND VERFAHREN ZUM HERSTELLEN EINES BECHERS**

(30) Priorität: 14.04.2021 DE 202021002324 U; 14.04.2021 DE 202021002771 U; 14.04.2021 EP 21168361; 03.09.2021 EP 21194862
(71) Anmelder: PACCOR Packaging GmbH, 40468 Düsseldorf (DE)
(72) Erfinder: PRYK, Slawomir, 96-100 Skierniewice (PL)
(74) Vertreter: König Szynka Tilmann von Renesse Patentanwälte Partnerschaft mbB Düsseldorf

(57) **Zusammenfassung**

Die Erfindung betrifft einen Becher mit einer von einem Rand umgebenen Becheröffnung, einem der Becheröffnung gegenüberliegenden Boden, einer von der Becheröffnung zum Boden verlaufenden Längsachse, einen näher zum Rand als zum Boden angeordneten oberen Teil, der eine Außenoberfläche und eine Innenoberfläche aufweist, wobei der obere Teil entweder einen konstanten Durchmesser hat oder der obere Teil kegelstumpfförmig ausgeführt ist und sich von einem oberen Durchmesser zu einem unteren Durchmesser verjüngt, einen zwischen dem oberen Teil und dem Boden angeordneten Zwischenteil, der eine Außenoberfläche und eine Innenoberfläche aufweist, wobei der Zwischenteil entweder einen konstanten Durchmesser hat oder der Zwischenteil kegelstumpfförmig ausgeführt ist und sich von einem oberen Durchmesser zu einem unteren Durchmesser verjüngt, wobei jeder Durchmesser des oberen Teils größer ist als jeder Durchmesser des Zwischenteils, bei dem an der Außenoberfläche des oberen Teils eine über andere Teile der Außenoberfläche vorspringende Abfolge von Schriftzeichen vorgesehen ist.

## Beschreibung

Die Erfindung betrifft einen Becher. Ebenso betrifft die Erfindung ein Verfahren zum Herstellen eines Bechers.

Aus der Praxis sind aus Polyethylenterephthalat (PET) im Wege des Tiefziehens hergestellte Trinkbecher nach dem Oberbegriff des Anspruchs 1 bekannt. Ferner ist es aus der Praxis bekannt, dass bei diesen Bechern an der Oberfläche des Zwischenteils ein über andere Teile der Außenoberfläche vorspringender Eichstrich vorgesehen ist. Ferner ist es aus der Praxis bekannt, dass an der Außenoberfläche des Zwischenteils und benachbart zum Eichstrich eine über andere Teile der Außenoberfläche vorspringende Abfolge von Schriftzeichen, meist eine Volumenangabe wie beispielsweise "0,3" oder "0,5" vorgesehen ist.

Vor diesem Hintergrund lag der Erfindung die Aufgabe zugrunde, eine detailreichere aber dennoch gut lesbare Kennung an dem Becher vorzusehen.

Diese Aufgabe wird durch den Gegenstand des Anspruchs 1 sowie durch das Verfahren gemäß Anspruch 11 gelöst. Vorteilhafte Ausführungsformen sind in den Unteransprüchen und der hiernach folgenden Beschreibung wiedergegeben.

Die Erfindung geht von dem Grundgedanken aus, die Möglichkeit zu schaffen,
- dass an der Außenoberfläche des oberen Teils eine über andere Teile der Außenoberfläche vorspringende Abfolge von Schriftzeichen vorgesehen ist und
- dass zwischen dem oberen Teil und dem Zwischenteil ein Übergang angeordnet ist.

In einer bevorzugten Ausführungsform sieht die Erfindung vor, als Teil der Kennzeichnung des Bechers auch einen Rahmen und sogar in einer bevorzugten Ausführungsform innerhalb des Rahmens angeordnete Piktogramme sowie eine, in einer bevorzugten Ausführungsform mehrere Abfolgen von Schriftzeichen als Teil der Kennzeichnung vorzusehen. In einer bevorzugten Ausführungsform sieht die Erfindung vor, als Teil der Kennzeichnung des Bechers zwar keinen Rahmen aber mindestens ein an der Außenoberfläche des oberen Teils über andere Teile der Außenoberfläche vorspringendes Piktogramme vorzusehen.

Im Unterschied zu den aus dem Stand der Technik bekannten Ansätzen, wo Kennzeichnungen des Bechers im Zwischenteil vorgesehen werden, wird mit der Erfindung die Möglichkeit geschaffen, trotz der vorgesehenen Detailfülle der Kennzeichnung diese dennoch gut lesbar zu machen, weil die erfindungsgemäß vorgesehene Abfolge von Schriftzeichen in dem oberen Teil des Bechers vorgesehen wird und in einer bevorzugten Ausführungsform auch der vorzugsweise vorgesehene Rahmen in dem oberen Teil des Bechers vorgesehen wird. Insbesondere bei einem durch Tiefziehen hergestellten Becher nimmt die Materialstärke der Becherwand von der Becheröffnung zum Boden hin ab. Nach den Erkenntnissen der Erfindung ist eine Abfolge von Schriftzeichen, beziehungsweise soweit vorgesehen ein Rahmen besser lesbar, wenn sie in einem Teil des Bechers hergestellt wird, der eher dickwandig ist (im Verhältnis zu anderen Bereichen des Bechers, die dünnwandiger sind).

Der Becher weist eine von einem Rand umgebende Becheröffnung auf. Der Rand kann als radial nach außen vorspringender Rand ausgebildet sein. Ebenso sind Bauformen denkbar, bei denen der Rand durch aufgerolltes Material gebildet wird.

In einer bevorzugten Ausführungsform ist die von dem Rand umgebene Becheröffnung kreisförmig.

Der Becher weist ferner einen der Becheröffnung gegenüberliegenden Boden auf. Der Boden kann flach ausgeführt sein. In einer bevorzugten Ausführungsform weist der Boden eine in das Becherinnere ragende Wölbung auf. Ergänzend oder alternativ sind Bauformen möglich, bei denen der Boden einen äußeren Standring aufweist, der eine ringförmige, ebene Standfläche aufweist, wobei der Boden ferner einen innerhalb des Standrings angeordneten Innenabschnitt aufweist, der bezüglich der Standfläche des Standrings zurückspringt. Das Zurückspringen des Innenabschnitts des Bodens kann durch eine Stufe ermöglicht werden. Ebenso kann das Zurückspringen des Innenabschnitts des Bodens dadurch ermöglicht werden, dass sich der Boden am Innenrand der Standfläche beginnend in das Becherinnere nach innen wölbt. Ebenso ist eine Kombination aus einer Stufe und einem sich nach innen wölbenden Innenabschnitt des Bodens denkbar.

Der Boden kann an seiner Außenoberfläche eine über andere Teile der Außenoberfläche des Bodens vorspringende Abfolge von Schriftzeichen, vorzugsweise mehrerer an der Außenoberfläche des Bodens vorgesehene und jeweils über andere Teile der Außenoberfläche des Bodens vorspringende Abfolgen von Schriftzeichen aufweisen. Ergänzend oder alternativ kann an der Außenoberfläche des Bodens ein über andere Teile der Außenoberfläche des Bodens vorspringendes Piktogramm vorgesehen sein. Vorzugsweise sind mehrere an der Außenoberfläche des Bodens über andere Teile der Außenoberfläche vorspringende Piktogramme vorgesehen.

In einer bevorzugten Ausführungsform weist der Boden einen Außenumfang auf, der einen kreisförmigen Querschnitt aufweist.

Der erfindungsgemäße Becher weist eine von der Becheröffnung zum Boden verlaufende Längsachse auf.

Der Becher weist eine sich von dem Rand bis zum Boden erstreckende Becherwand auf. Der Becher hat einen näher zum Rand als zum Boden angeordneten oberen Teil. In einer bevorzugten Ausführungsform schließt sich der obere Teil unmittelbar an den Rand an. Der obere Teil hat eine Außenoberfläche, die Teil der Außenoberfläche der Becherwand ist. Ferner hat der obere Teil eine Innenoberfläche, die Teil der Innenoberfläche der Becherwand ist. Der obere Teil kann einen konstanten Durchmesser haben. In einer alternativen Ausführungsform ist der obere Teil kegelstumpfförmig ausgeführt und verjüngt sich von einem oberen Durchmesser zu einem unteren Durchmesser. Der obere Durchmesser ist dabei näher zum Rand angeordnet als der untere Durchmesser.

In einer bevorzugten Ausführungsform ist der konstante Durchmesser des oberen Teils, bzw. der untere Durchmesser eines kegelstumpfförmig ausgeführten oberen Teils größer als 25 mm, vorzugsweise größer als 30 mm, vorzugsweise größer als 40 mm, vorzugsweise größer als 50 mm.

Der Becher hat einen zwischen dem oberen Teil und dem Boden angeordneten Zwischenteil. Der Zwischenteil weist eine Außenoberfläche auf, die einen Teil der Außenoberfläche der Becherwand bildet. Der Zwischenteil hat eine Innenoberfläche, die einen Teil der Innenoberfläche der Becherwand bildet. Der Zwischenteil hat entweder einen konstanten Durchmesser oder der Zwischenteil ist kegelstumpfförmig ausgeführt und verjüngt sich von einem oberen Durchmesser zu einem unteren Durchmesser, wobei der obere Durchmesser näher zum Rand angeordnet ist als der untere Durchmesser.

Jeder Durchmesser des oberen Teils ist größer als jeder Durchmesser des Zwischenteils.

In einer bevorzugten Ausführungsform ist der konstante Durchmesser, bzw. der untere Durchmesser des oberen Teils um mindestens 1 mm, insbesondere bevorzugt um mindestens 2 mm größer als der konstante Durchmesser des Zwischenteils, bzw. als der obere Durchmesser eines kegelstumpfförmig ausgeführten Zwischenteils.

Zwischen dem oberen Teil und dem Zwischenteil ist ein Übergang angeordnet. Der Übergang kann kegelstumpfförmig ausgeführt sein. Der Übergang kann einen in einem Querschnitt, der die Längsachse des Bechers enthält, einen kreisbogenförmigen Querschnitt aufweisen. Der Übergang kann als Stufe ausgeführt sein. In einer bevorzugten Ausführungsform ist die in Richtung der Längsachse gemessene Länge des Übergangs kleiner als 15 mm, vorzugsweise kleiner als 10 mm. In einer bevorzugten Ausführungsform ist die Breite der Stufe in Radialrichtung gemessen größer als 0,2mm, vorzugsweise größer als 0,5mm, vorzugsweise größer als 1mm, vorzugsweise größer als 2mm. In einer bevorzugten Ausführungsform ist die Breite der Stufe in Radialrichtung gemessen kleiner als 15mm, vorzugsweise kleiner als 10mm, vorzugsweise kleiner als 7,5mm, vorzugsweise kleiner als 5mm.

In einer bevorzugten Ausführungsform ist die in Richtung der Längsachse gemessene Länge des oberen Teils kleiner als die in die Richtung der Längsachse gemessene Länge des Zwischenteils. In einer bevorzugten Ausführungsform ist das Verhältnis zwischen der in Richtung der Längsachse gemessene Länge des Zwischenteils (LZ) und der in die Richtung der Längsachse gemessene Länge des oberen Teils (LOT)

LZ / LOT größer als 1,2, vorzugsweise größer als 1,5, vorzugsweise größer als 2, vorzugsweise größer als 2,5.

In einer bevorzugten Ausführungsform ist die in Richtung der Längsachse gemessene Länge des oberen Teils größer als 10mm, vorzugsweise größer als 15mm, vorzugsweise größer als 17mm. In einer bevorzugten Ausführungsform ist die in Richtung der Längsachse gemessene Länge des oberen Teils kleiner als 35mm, vorzugsweise kleiner als 30mm, vorzugsweise kleiner als 17mm.

In einer bevorzugten Ausführungsform ist an der Außenoberfläche des oberen Teils ein über andere Teile der Außenfläche vorspringender Rahmen vorgesehen.

Der Rahmen hat in einer bevorzugten Ausführungsform eine rechteckige Form, wobei sowohl eine rechteckige Form mit zwei einander gegenüberliegenden größeren Kanten und zwei senkrecht dazu verlaufenden, einander gegenüberliegenden kürzeren Kanten denkbar ist, als auch eine quadratische Form denkbar ist. Es sind jedoch auch Ausführungsformen denkbar, bei denen der Rahmen beispielsweise kreisförmig, ellipsenförmig oder diamantförmig ist oder die Form eines Parallelogramms hat.

Der Rahmen wird insbesondere bevorzugt durch einen über andere Teile der Außenoberfläche vorspringenden Wulst gebildet. In einer bevorzugten Ausführungsform hat der Wulst eine Scheitellinie, die die Form des Rahmens hat. In einer bevorzugten Ausführungsform hat die Scheitellinie mithin die Form eines Rechtecks, ist kreisförmig, ellipsenförmig oder diamantförmig oder hat die Form eines Parallelogramms hat (je nach Gestaltung des durch den Wulst gebildeten Rahmens).

In einer bevorzugten Ausführungsform ist die Scheitellinie durchgängig. In einer bevorzugten Ausführungsform weist die Scheitellinie über ihre gesamte Erstreckung den gleichen Abstand (die gleiche Höhe) zu einer zylinderförmigen Referenzfläche (bei zylinderförmig ausgeführtem oberen Teil) bzw. zu einer kegelstumpfförmigen Referenzfläche (bei kegelstumpfförmig ausgeführten oberen Teil) auf.

Es sind Ausführungsformen denkbar, bei denen der Wulst Einkerbungen aufweist, so dass die Scheitellinie des Wulst unterbrochen wird. In einer bevorzugten Ausführungsform ist die Scheitellinie des Wulst jedoch eine durchgängige, nämlich geschlossene und nicht unterbrochene Linie.

Der Rahmen hat einen oberen, näher zum Rand angeordneten Punkt oder Abschnitt und einen unteren, näher zum Boden angeordneten Punkt oder Abschnitt. In einer bevorzugten Ausführungsform ist der obere Punkt, bzw. der obere Abschnitt der Teil des Rahmens, der am nächsten zum Rand angeordnet ist. In einer bevorzugten Ausführungsform ist der untere Punkt, bzw. der untere Abschnitt der als nächstes zum Boden angeordnete Punkt oder Abschnitt des Rahmens.

Bei einem als rechteckigen Rahmen ausgeführten Rahmen ist der obere Abschnitt des Rahmen vorzugsweise eine Kante des Rechtecks, die parallel zum Rand verläuft. Bei einem als rechteckigen Rahmen ausgeführten Rahmen ist der untere Abschnitt vorzugsweise eine parallel zum Rand verlaufende Kante des Rechtecks.

Bei einem als Ellipse ausgeführten Rahmen kann der obere Punkt ein Scheitelpunkt der Ellipse sein und der untere Punkt ein Scheitelpunkt der Ellipse sein. Bei einem diamantförmig ausgeführten Rahmen kann die obere Spitze des diamantförmigen Rahmens der obere Punkt des Rahmens und die untere Spitze des diamantförmigen Rahmens der untere Punkt des Rahmens sein. In einer bevorzugten Ausführungsform verläuft eine den oberen Punkt mit dem unteren Punkt verbindende Linie in einer Ebene, die auch die Längsachse des Bechers enthält.

In einer bevorzugten Ausführungsform, bei der der Rahmen eine rechteckige Form aufweist, wird obere Abschnitt durch eine Kante des Rechtecks gebildet, die länger ist als eine senkrecht zu dieser Kante verlaufende Kante des Rechtecks. Ein rechteckig ausgeführter Rahmen erstreckt sich in einer bevorzugten Ausführungsform mithin in Umfangsrichtung des oberen Teils. In einer bevorzugten Ausführungsform verlaufen die längeren Kanten des Rechtecks in Umfangsrichtung und die kürzeren Kanten des Rechtecks verlaufen in Richtung vom Rand auf den Boden.

In einer bevorzugten Ausführungsform ist die Außenoberfläche des oberen Teils über mindestens 30 %, vorzugsweise über mindestens 50 %, vorzugsweise über mindestens 75 % ihrer Erstreckung zylinderförmig oder kegelstumpfförmig und mithin ohne Wulste oder Vorsprünge ausgeführt.

In einer bevorzugten Ausführungsform wird als Referenzfläche die Fläche verstanden, die die Teile der Außenoberfläche des oberen Teils enthält, die zylinderförmig ausgeführt sind, wenn der obere Teil zylinderförmig ausgeführt ist, und die einen konstanten Durchmesser aufweist. In einer bevorzugten Ausführungsform wird die kegelstumpfförmige Fläche als Referenzfläche bezeichnet, die die Teile der Außenoberfläche des oberen Teils enthält, die kegelstumpfförmig ausgeführt sind, wenn der obere Teil kegelstumpfförmig ausgeführt ist, und die sich von einem obere Durchmesser zu einem unteren Durchmesser verjüngt.

In einer bevorzugten Ausführungsform ist der Scheitelpunkt des Wulst, der in einer bevorzugten Ausführungsform den Rahmen bildet, um mindestens 10 bis 200 µm, vorzugsweise 10 bis 50 µm von der Referenzfläche beabstandet. Der Rahmen springt mithin um mindestens 10 bis 200 µm, vorzugsweise 10 bis 50 µm über die zylinderförmig, beziehungsweise kegelstumpfförmigen Teile der Außenoberfläche des oberen Teils vor.

Der Rahmen erstreckt sich in Umfangsrichtung des oberen Teils von einem Startpunkt oder einem Startabschnitt zu einem in Umfangsrichtung zum Startpunkt oder Startabschnitt versetzt angeordneten Endpunkt oder Endabschnitts. Der Startpunkt, bzw. der Startabschnitt des Rahmens ist vorzugsweise der am weitesten in die eine Umfangsrichtung weisende Punkt, bzw. Abschnitt des Rahmens (beispielsweise der am weitesten in den Uhrzeigersinn angeordnete Punkt, bzw. Abschnitt des Rahmens). Der Endpunkt, bzw. der Endabschnitt ist in der bevorzugten Ausführungsform der Punkt, bzw. der Abschnitt des Rahmens, der im Verhältnis zum Startpunkt, bzw. Startabschnitt am weitesten in die gegenüberliegende Umfangsrichtung angeordnet ist, also insbesondere der Punkt, bzw. der Abschnitt des Rahmens, der am weitesten in den Gegenuhrzeigersinn angeordnet ist.

Der Startabschnitt kann bei einem rechteckig ausgeführten Rahmen eine Kante des Rahmens, vorzugsweise die schmalere Kante eines Rahmens sein. Der Endabschnitt kann bei einem rechteckig ausgeführten Rahmen insbesondere bevorzugt die gegenüberliegende Kante des Rechtecks, vorzugsweise ebenfalls eine schmale Kante des Rechtecks sein. Bei einem ellipsenförmig ausgeführten Rahmen kann der Startpunkt ein Scheitelpunkt der Ellipse sein und auch der Endpunkt kann ein Scheitelpunkt der Ellipse sein. Bei einem diamantförmig ausgeführten Rahmen kann der Startpunkt eine Spitze des Diamanten sein und der Endpunkt die Spitze eines Diamanten sein.

In einer bevorzugten Ausführungsform liegen der Startpunkt und der Endpunkt auf einer Umfangslinie des oberen Abschnitts, die in einer Ebene verläuft, die senkrecht zur Längsachse steht.

Erfindungsgemäß ist der Winkel zwischen einer ersten Radialen des oberen Teils, die durch den Startpunkt oder den Startabschnitt verläuft und einer zweiten Radialen, die durch den Endpunkt oder den Endabschnitt verläuft, kleiner als 90°, insbesondere bevorzugt kleiner als 80°, insbesondere bevorzugt kleiner als 75°, insbesondere bevorzugt kleiner als 70°, insbesondere bevorzugt kleiner als 50°. Es ist mithin in der bevorzugen Ausführungsform vorgesehen, dass sich der Rahmen nur über einen begrenzten Oberflächenabschnitt des oberen Teils erstreckt. Bei den Ausführungsformen, bei den der Rahmen einen Startabschnitt und einen Endabschnitt aufweist, ist die erste Radiale und die zweite Radiale in einer Ebene angeordnet, die senkrecht zur Längsachse des Bechers verläuft.

Erfindungsgemäß ist vorgesehen, dass an der Außenoberfläche des oberen Teils und benachbart zum Rahmen eine über andere Teile der Außenoberfläche vorspringende Abfolge von Schriftzeichen vorgesehen ist. In einer bevorzugten Ausführungsform, bei der ein an der Außenoberfläche des oberen Teils ein Rahmen vorgesehen ist, ist in einer bevorzugten Ausführungsform die über andere Teile der Außenoberfläche vorspringende Abfolge von Schriftzeichen an der Außenoberfläche des oberen Teils und benachbart zum Rahmen vorgesehen.

Die Abfolge von Schriftzeichen weist vorzugsweise mindestens drei Schriftzeichen, vorzugsweise mindestens fünf Schriftzeichen und insbesondere bevorzugt mindestens 10 Schriftzeichen auf. In einer bevorzugten Ausführungsform erstreckt sich die Abfolge von Schriftzeichen entlang einer Linie. In einer bevorzugten Ausführungsform erstreckt sich die Linie, entlang der sich die Abfolge von Schriftzeichen erstreckt, in Umfangsrichtung. In einer bevorzugten Ausführungsform besteht die Abfolge von Schriftzeichen mehrheitlich (zu mehr als 50 %), insbesondere bevorzugt überwiegend mehrheitlich (zu mehr als 75 %) aus Buchstaben und in einer ganz besonders bevorzugten Ausführungsform gänzlich aus Buchstaben und nicht aus Zahlen. In einer bevorzugten Ausführungsform weist die Abfolge von Schriftzeichen ein, insbesondere bevorzugt mehrere Schriftzeichen aus einer Blindenschrift, beispielsweise Braille auf. In einer bevorzugten Ausführungsform besteht die Abfolge von Schriftzeichen mehrheitlich, insbesondere bevorzugt gänzlich aus Schriftzeichen aus einer Blindenschrift, beispielsweise Braille auf.

In einer bevorzugten Ausführungsform hat der für die Abfolge von Schriftzeichen verwendete Font eine Höhe von mehr als 4 Punkte (4 pt), vorzugsweise gleich oder mehr als 5 Punkte (5pt). In einer bevorzugten Ausführungsform hat der für die Abfolge von Schriftzeichen verwendete Font eine Höhe von weniger als 15 Punkte (4 pt), vorzugsweise gleich oder weniger als 10 Punkte (5pt).

In einer bevorzugten Ausführungsform ist der Becher durch Tiefziehen hergestellt worden. Dass der Becher durch Tiefziehen hergestellt wurde, lässt sich beispielsweise dadurch erkennen, dass die Wandstärke der Becherwand im Bereich des Rands dicker ist, als die Wandstärke der Becherwand im Bereich des Bodens.

In einer bevorzugten Ausführungsform ist der Rahmen und/oder die Abfolge der Schriftzeichen durch eine Art Prägen hergestellt. Dass der Rahmen durch Prägen hergestellt wurde, lässt sich insbesondere daran erkennen, dass an der Innenoberfläche des oberen Teils jeweils das Gegenstück zu dem an der Außenoberfläche gegenüber anderen Teilen der Außenoberfläche vorspringenden Rahmens in Form eines gegenüber anderen Teilen der Innenoberfläche zurückspringenden Rahmens zu erkennen ist. Dass die Abfolge der Schriftzeichen durch eine Art Prägen hergestellt wurde, lässt sich insbesondere daran erkennen, dass an der Innenoberfläche des oberen Teils jeweils das Gegenstück zu der an der Außenoberfläche gegenüber anderen Teilen der Außenoberfläche vorspringenden Abfolge der Schriftzeichen in Form einer gegenüber anderen Teilen der Innenoberfläche zurückspringenden Abfolge der Schriftzeichen zu erkennen ist.

Unter einem Prägen wird im Kontext dieser Beschreibung sowohl ein Formgebungsverfahren verstanden, bei dem einem Material mittels eines Prägestempels eine bestimmte Form gegeben wird, als auch ein Formgebungsverfahren verstanden, bei dem einem Material, das mit einer Oberfläche an einer Oberfläche mit Ausnehmungen anliegt, dadurch eine Form aufgeprägt wird, in dem das Material an seiner freien Oberfläche mit einem Fluid, vorzugsweise Druckluft, mit Überdruck beaufschlagt wird, die die Bereiche des Materials, die über den Ausnehmung liegen, in die Ausnehmungen drückt. Die Ausnehmung hat beispielsweise die Form des zu erzeugenden Rahmens und/oder die Form der zu erzeugenden Abfolge von Schriftzeichen.

In einer bevorzugten Ausführungsform ist die Wandstärke des oberen Teils konstant und dicker als
- die Wandstärke des Zwischenteils, für die Ausführungsformen, bei denen auch das Zwischenteil eine konstante Wandstärke hat oder
- die dickste Wandstärke des Zwischenteils.

In einer bevorzugten Ausführungsform ist die dünnste Wandstärke des oberen Teils dicker als
- die Wandstärke des Zwischenteils, für die Ausführungsformen, bei denen auch das Zwischenteil eine konstante Wandstärke hat oder
- die dickste Wandstärke des Zwischenteils.

In einer bevorzugten Ausführungsform liegt die Wandstärke des oberen Teils in dem Bereich von 75 bis 900 µm, vorzugsweise 100 bis 700 µm, vorzugsweise 150 bis 600 µm, vorzugsweise 200 bis 500 µm. Das obere Teil kann eine konstante Wandstärke haben. Vorzugsweise ist die Wandstärke des oberen Teils näher am Rand dicker als weiter vom Rand entfernt.

In einer der bevorzugten Ausführungsform liegt die Wandstärke des Zwischenteils in einem Bereich 25 bis 850 µm, vorzugsweise 50 bis 700 µm, vorzugsweise 75 bis 600 µm, vorzugsweise 100 bis 500 µm. Das Zwischenteil kann eine konstante Wandstärke haben. Vorzugsweise ist die Wandstärke des Zwischenteils näher am oberen Teil dicker als weiter vom oberen Teil entfernt.

In einer bevorzugten Ausführungsform ist die konstante Wandstärke des oberen Teils um den Faktor 1,1, vorzugsweise um den Faktor 1,17, vorzugsweise um den Faktor 1,2, vorzugsweise um den Faktor 1,4, vorzugsweise um den Faktor 1,5 dicker als
- die Wandstärke des Zwischenteils, für die Ausführungsformen, bei denen auch das Zwischenteil eine konstante Wandstärke hat oder
- die dickste Wandstärke des Zwischenteils.

In einer bevorzugten Ausführungsform ist die dünnste Wandstärke des oberen Teils um den Faktor 1,1, vorzugsweise um den Faktor 1,17, vorzugsweise um den Faktor 1,2 vorzugsweise um den Faktor 1,4, vorzugsweise um den Faktor 1,5 dicker als
- die Wandstärke des Zwischenteils, für die Ausführungsformen, bei denen auch das Zwischenteil eine konstante Wandstärke hat oder
- die dickste Wandstärke des Zwischenteils.

In einer bevorzugten Ausführungsform ist an der Innenoberfläche des oberen Teils ein vorzugsweise durch Prägen erzeugter, gegenüber anderen Teilen der Innenoberfläche zurückspringender Rahmen vorgesehen ist, wobei der Rahmen
- einen oberen, näher zum Rand angeordneten Punkt oder Abschnitt und einen unteren, näher zum Boden angeordneten Punkt oder Abschnitt aufweist und
- in Umfangsrichtung des oberen Teils gesehen einen Startpunkt oder Startabschnitt und einen in Umfangsrichtung zum Startpunkt oder Startabschnitt versetzt angeordneten Endpunkt oder Endabschnitt aufweist, wobei der Winkel zwischen einer ersten Radialen des oberen Teils, die durch den Startpunkt oder Startabschnitt verläuft, und einer zweiten Radialen, die durch den Endpunkt oder den Endabschnitt verläuft, kleiner ist als 90°.

In einer bevorzugten Ausführungsform ist der an der Innenoberfläche vorgesehene Rahmen an der Stelle der Wandung des oberen Teils vorgesehen, an dessen Außenoberfläche der von der Außenoberfläche überstehende Rahmen vorgesehen ist. In einer bevorzugten Ausführungsform werden der an der Innenoberfläche vorgesehene Rahmen und der von der Außenoberfläche überstehende Rahmen im gleichen Arbeitsschritt, vorzugsweise durch Prägen, beispielsweise durch Aufbringen eines Innendrucks mittels eines Fluid, beispielsweise Druckluft, erzeugt.

In einer bevorzugten Ausführungsform ist an der Innenoberfläche des oberen Teils und benachbart zum Rahmen eine vorzugsweise durch Prägen erzeugte, gegenüber anderen Teilen der Innenoberfläche zurückspringende Abfolge von Schriftzeichen vorgesehen ist.

In einer bevorzugten Ausführungsform ist die an der Innenoberfläche vorgesehene Abfolge von Schriftzeichen an der Stelle der Wandung des oberen Teils vorgesehen, an dessen Außenoberfläche die von der Außenoberfläche überstehende Abfolge von Schriftzeichen vorgesehen ist. In einer bevorzugten Ausführungsform werden die an der Innenoberfläche vorgesehene Abfolge von Schriftzeichen und die von der Außenoberfläche überstehende Abfolge von Schriftzeichen im gleichen Arbeitsschritt, vorzugsweise durch Prägen, beispielsweise durch Aufbringen eines Innendrucks mittels eines Fluid, beispielsweise Druckluft, erzeugt.

In einer bevorzugten Ausführungsform ist zwischen dem Zwischenteil und dem Boden ein unterer Teil angeordnet. Der untere Teil weist eine Außenoberfläche auf, die einen Teil der Außenoberfläche der Becherwand bildet. Der untere Teil weist ferner eine Innenoberfläche auf, die einen Teil der Innenoberfläche der Becherwand bildet. Der untere Teil weist entweder einen konstanten Durchmesser auf oder der untere Teil ist kegelstumpfförmig ausgeführt und verjüngt sich von einem oberen Durchmesser, der näher zum Rand angeordnet ist, zu einem unteren Durchmesser, der näher zum Boden angeordnet ist. Jeder Durchmesser des Zwischenteils ist größer als jeder Durchmesser des unteren Teils. In einer bevorzugten Ausführungsform sind mehrere untere Teile unterhalb des Zwischenteils vorgesehen, wobei der jeweils näher zum Boden angeordnete eine untere Teil im Durchmesser stets kleiner ist als ein weiter entfernt vom Boden und näher zum Zwischenteil angeordneter weiterer unterer Teil. Zwischen den verschiedenen unteren Teilen und zwischen dem Zwischenteil und dem dem Zwischenteil als nächstes angeordneten unteren Teil können jeweils Übergänge in Form von Stufen oder kegelstumpfförmigen Abschnitten vorgesehen sein.

In einer bevorzugten Ausführungsform ist der Becher aus Polyethylenterephthalat (PET) hergestellt. In einer bevorzugten Ausführungsform weist das PET einen rezyklierten Anteil auf. In einer bevorzugten Ausführungsform liegt der rezyklierte Anteil zwischen 0 % und 100 %. In einer bevorzugten Ausführungsform ist das Material des Bechers ein einlagiges Material. In einer ebenfalls bevorzugten Ausführungsform ist das Material des Bechers ein mehrlagiges Material. In einer bevorzugten Ausführungsform ist das Material des Bechers ein Polypropylen (PP). In einer bevorzugten Ausführungsform ist das Material des Bechers ein Polystyrol (PS). In einer bevorzugten Ausführungsform ist das Material des Bechers ein tiefziehfähiges Material. In einer bevorzugten Ausführungsform ist das Material des Bechers ein homogenes Material. In einer bevorzugten Ausführungsform ist das Material des Bechers ein Kunststoff auf der Basis nachwachsender Rohstoffe und/oder ein Kunststoff, der biologisch abgebaut wird.

In einer bevorzugten Ausführungsform ist das Material des Bechers durchsichtig oder opak.

In einer bevorzugten Ausführungsform ist an der Außenoberfläche des oberen Teils ein über andere Teile der Außenoberfläche vorspringendes Piktogramm vorgesehen. Das Piktogramm ist vorzugsweise durch Prägen erzeugt. In einer bevorzugten Ausführungsform ist an der Außenoberfläche des oberen Teils und innerhalb des Rahmens mindestens ein über andere Teile der Außenoberfläche vorspringendes Piktogramm vorgesehen. Das Piktogramm ist vorzugsweise durch Prägen erzeugt. In einer bevorzugten Ausführungsform sind an der Außenoberfläche des oberen Teils und innerhalb des Rahmens zwei jeweils über andere Teile der Außenoberfläche vorspringende Piktogramme vorgesehen. Die Piktogramme sind vorzugsweise durch Prägen erzeugt.

In einer bevorzugten Ausführungsform ist an der Außenoberfläche des oberen Teils und innerhalb des Rahmens eine zusätzliche, über andere Teile der Außenoberfläche vorspringende Abfolge von Schriftzeichen vorgesehen. Diese Abfolge ist zusätzlich zu der erfindungsgemäß benachbart zu dem Rahmen vorgesehenen Abfolge von Schriftzeichen.

In einer bevorzugten Ausführungsform ist
- eine erste, vorzugsweise durch Prägen erzeugte, sich entlang einer Line erstreckende Abfolge von Schriftzeichen vorgesehen, die an der Außenoberfläche des oberen Teils und benachbart zum Rahmen vorgesehen ist, und
- eine zweite, vorzugsweise durch Prägen erzeugte, sich entlang einer Line erstreckende Abfolge von Schriftzeichen vorgesehen, die an der Außenoberfläche des oberen Teils und benachbart zum Rahmen vorgesehen ist.

In einer bevorzugten Ausführungsform sind mindestens zwei, vorzugsweise mindestens drei Abfolgen von Schriftfolgen, die sich jeweils entlang einer Line erstrecken, auf einer Seite des Rahmens benachbart zum Rahmen vorgesehen. Vorzugsweise erstrecken sich die auf einer Seite des Rahmens angeordneten Abfolgen von Schriftzeichen entlang Linien, die parallel zu einander angeordnet sind.

In einer bevorzugten Ausführungsform sind mindestens zwei, vorzugsweise mindestens drei Abfolgen von Schriftfolgen, die sich jeweils entlang einer Line erstrecken, auf einer Seite des Rahmens benachbart zum Rahmen vorgesehen und mindestens zwei, vorzugsweise mindestens drei Abfolgen von Schriftfolgen, die sich jeweils entlang einer Line erstrecken, auf der anderen Seite des Rahmens benachbart zum Rahmen vorgesehen. Vorzugsweise erstrecken sich die Abfolgen von Schriftzeichen dieser Ausführungsform entlang Linien, die parallel zu einander angeordnet sind. Vorzugsweise erstreckt sich mindestens eine Abfolge von Schriftzeichen auf der einen Seite des Rahmen entlang einer Linie, entlang der sich auch eine Abfolge von Schriftzeichen auf der anderen Seite des Rahmens erstreckt.

Die jeweilige Linie, entlang sich in einer der bevorzugten Ausführungsformen die jeweilige Abfolge von Schriftzeichen erstreckt, ist vorzugsweise eine Umfangslinie des oberen Teils.

In einer bevorzugten Ausführungsform hat der Becher ein Volumen von mehr als 0,1 Liter, vorzugsweise von mehr als 0,2 Liter. In einer bevorzugten Ausführungsform hat der Becher ein Volumen von weniger als 2 Liter, vorzugsweise von weniger als 1 Liter, vorzugsweise von weniger als 0,75 Liter.

Das erfindungsgemäße Verfahren zum Herstellen eines erfindungsgemäßen Bechers sieht vor, dass der Becher durch Tiefziehen hergestellt wird und der Rahmen und die Abfolge von Schriftzeichen dadurch erzeugt wird, dass auf die Innenoberfläche des oberen Teils gedrückt wird.

In einer bevorzugten Ausführungsform wird zum Tiefziehen des Bechers eine Tiefziehform verwendet wird, die einen Absatz aufweist, wobei beim Tiefziehen der obere Teil oberhalb des Absatzes gebildet wird und der Zwischenteil unterhalb des Absatzes gebildet wird. Der Absatz kann dazu genutzt werden, den Übergang zwischen dem oberen Teil und dem Zwischenteil zu erzeugen. Der Absatz kann dazu verwendet werden, das beim Vorformen des Bechers mittels eines Tiefziehstempels Material oberhalb des Absatzes zurückgehalten wird, so dass die Wandstärke des oberen Teils deutlich größer wird als die Wandstärke des unterhalb des Absatzes geformten Zwischenteils.

In einer bevorzugten Ausführungsform weist die Tiefziehform auf ihrer Innenoberfläche Ausnehmungen auf. Der Becher wird in dieser Ausführungsform mit einem Tiefziehstempel in der Tiefziehform vorgeformt wird, wobei zur Bildung des Rahmens und/oder der Abfolge von Schriftzeichen ein Fluid, vorzugsweise Druckluft mit Überdruck (beispielsweise 6 bar) in den vorgeformten Becher eingebracht wird und das Material des vorgeformten Bechers in die Ausnehmung drückt.

In einer bevorzugten Ausführungsform wird eine erwärmte Materialbahn zwischen einer Tiefziehform und einem Niederhalter eingespannt. In einer bevorzugten Ausführungsform fährt ein Tiefziehstempel aus und formt den Becher in der Weise vor, dass er das oberhalb einer Ausnehmung der Tiefziehform befindliche Material in die Ausnehmung der Tiefziehform zieht (drückt). In einer bevorzugten Ausführungsform wird zwischen den ausgefahrenen Tiefziehstempel und das ihn umgebende Material ein Fluid, vorzugsweise Druckluft, eingeblasen. Dadurch wird ein Innendruck auf die Innenoberfläche des vorgeformten Becher erzeugt, der das Material des vorgeformten Bechers an die Innenoberfläche der Ausnehmung der Tiefziehform drückt. Sind in der Innenoberfläche der Ausnehmung der Tiefziehform Ausnehmung zur Bildung eines Rahmens an der Außenoberfläche des Bechers und/oder Ausnehmungen zur Bildung einer Abfolge von Schriftzeichen an der Außenoberfläche des Bechers vorgesehen, so drückt der Innendruck das Material in diese Ausnehmungen und prägt dem Becher dadurch den Rahmen und/oder die Abfolge von Schriftzeichen an seiner Außenoberfläche auf.

In einer bevorzugten Ausführungsform wird das Material vor der Entnahme aus der Tiefziehform gekühlt.

In einer bevorzugten Ausführungsform ist die Innenoberfläche der Tiefziehform zumindest teileweise anodisiert, vorzugsweise zumindest in den Bereichen der Ausnehmungen, die zum Aufprägen des Rahmen und/oder der Abfolge von Schriftzeichen verwendet werden.

In einer bevorzugten Ausführungsform wird der erfindungsgemäße Becher als Trinkbecher verwendet.

Nachfolgend wird die Erfindung anhand von lediglich Ausführungsformen der Erfindung darstellenden Zeichnungen näher erläutert. Darin zeigen:

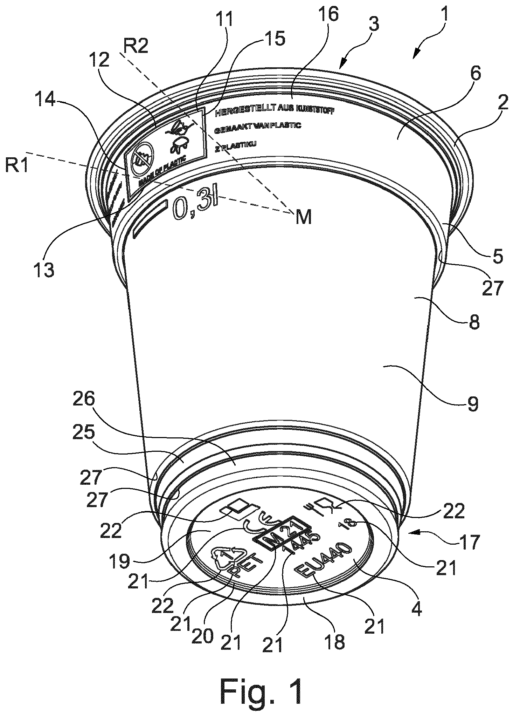

- Fig. 1: eine perspektivische Ansicht von unten auf einen erfindungsgemäßen Becher einer Ausführungsform mit Rahmen im oberen Teil;;
- Fig. 2: eine Seitenansicht des Bechers gemäß Fig. 1;
- Fig. 3: eine vergrößerte Darstellung des Rands und von Teilen des oberen Teils des Bechers gemäß Fig. 1 ;
- Fig. 4: eine geschnittene Ansicht eines Details des erfindungsgemäßen Bechers, die einen Schnitt durch den Rand des Bechers und den oberen Abschnitt des Rahmens zeigt;
- Fig. 5: eine perspektivische Ansicht von unten auf einen erfindungsgemäßen Becher einer Ausführungsform ohne Rahmen im oberen Teil;
- Fig. 6: eine Seitenansicht des Bechers gemäß Fig. 5;
- Fig. 7: eine vergrößerte Darstellung des Rands und von Teilen des oberen Teils des Bechers gemäß Fig. 5;
- Fig. 8: eine Seitenansicht eines erfindungsgemäßen Bechers mit einem Detail A
- Fig. 9: eine Seitenansicht auf das Detail A der Fig. 8 in einer vergrößerten Darstellung und
- Fig. 10: eine Schnittansicht der Seitenansicht des Details A gemäß Fig. 9 ebenfalls in vergrößerter Darstellung.

Der erfindungsgemäße Becher 1 weist eine von einem Rand 2 umgebenen Becheröffnung 3 auf. Der Becheröffnung 3 gegenüberliegenden ist ein Boden 4 vorgesehen. Eine Längsachse A verläuft von der Becheröffnung 3 zum Boden 4.

Der Becher 1 weist einen näher zum Rand 2 als zum Boden 4 angeordneten oberen Teil 5 auf, der eine Außenoberfläche 6 und eine Innenoberfläche 7 aufweist. In der dargestellten Ausführungsform ist der obere Teil 5 kegelstumpfförmig ausgeführt und verjüngt sich von einem oberen Durchmesser zu einem unteren Durchmesser.

Zwischen dem oberen Teil 5 und dem Boden 4 ist ein Zwischenteil 8 ausgeführt, der eine Außenoberfläche 9 und eine Innenoberfläche 10 aufweist. In der dargestellten Ausführungsform ist der Zwischenteil 8 kegelstumpfförmig ausgeführt und verjüngt sich von einem oberen Durchmesser zu einem unteren Durchmesser.

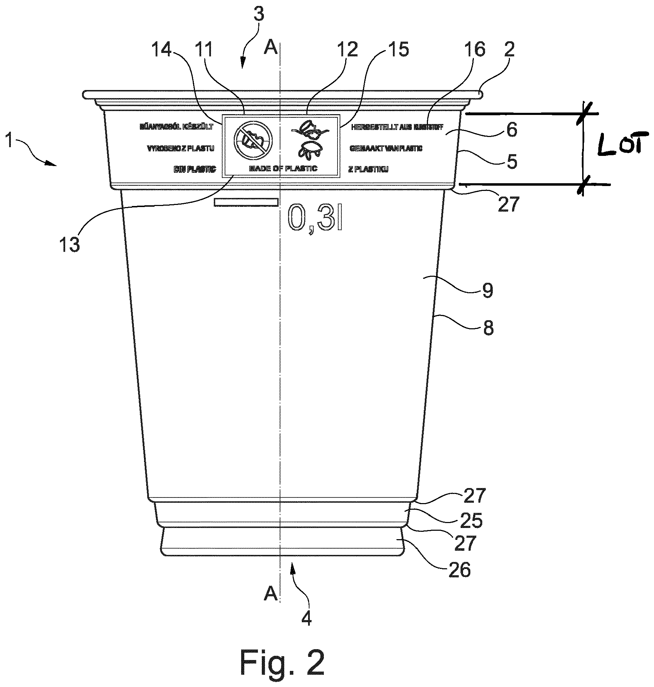

Jeder Durchmesser des oberen Teils 5 größer ist als jeder Durchmesser des Zwischenteils 8. Die in Fig. 2 dargestellte in Richtung der Längsachse gemessene Länge des oberen Teils LOT ist zwischen 10mm und 30mm, vorzugsweise zwischen 15 und 25mm groß.

An der Außenoberfläche 6 des oberen Teils 5 ist ein durch Prägen erzeugter, über andere Teile der Außenoberfläche 6 vorspringender Rahmen 11 vorgesehen. In der dargestellten Ausführungsform ist der Rahmen 11 rechteckig ausgeführt. Der Rahmen hat einen oberen, näher zum Rand 2 angeordneten Abschnitt 12 und einen unteren, näher zum Boden 4 angeordneten Abschnitt 13. Der Rahmen hat in Umfangsrichtung des oberen Teils gesehen einen Startabschnitt 14 und einen in Umfangsrichtung zum Startabschnitt 14 versetzt angeordneten Endabschnitt 15. Der Winkel zwischen einer ersten Radialen R1 des oberen Teils, die durch den Startabschnitt 14 verläuft, und einer zweiten Radialen R2, die durch den Endabschnitt 15 verläuft, kleiner ist als 90°. Die Radiale R1 und die Radiale R2 treffen sich in einem Mittelpunkt M, der auf der Längsachse A liegt, und verlaufen von dort radial nach außen. Die Radiale R1 und die Radiale R2 liegen in einer Ebene, die senkrecht zur Längsachse A steht.

An der Außenoberfläche 9 des oberen Teils 5 und benachbart zum Rahmen 11 ist eine durch Prägen erzeugte, über andere Teile der Außenoberfläche vorspringende Abfolge 16 von Schriftzeichen vorgesehen. Der für die Abfolge 16 von Schriftzeichen verwendete Font hat eine Höhe von zwischen 5pt bis 10pt.

Die von dem Rand 2 umgebene Becheröffnung 3 ist kreisförmig.

Der Boden 4 weist einen äußeren Standring 17 auf, der eine ringförmige, ebene Standfläche 18 aufweist. Der Boden 4 weist einen innerhalb des Standrings 17 angeordneten Innenabschnitt 19 auf, der bezüglich der Standfläche 18 des Standrings zurückspringt. Dazu ist eine Stufe 20 vorgesehen und der Innenabschnitt 19 so ausgeführt, dass er sich beginnend bei der Stufe 20 nach innen wölbt.

An seiner Außenoberfläche weist der Boden 4 durch Prägen erzeugte, über andere Teile der Außenoberfläche des Bodens 4 vorspringende Abfolge 21 von Schriftzeichen und Piktogramme 22 auf.

Der Boden 4 weist einen Außenumfang auf, der einen kreisförmigen Querschnitt hat.

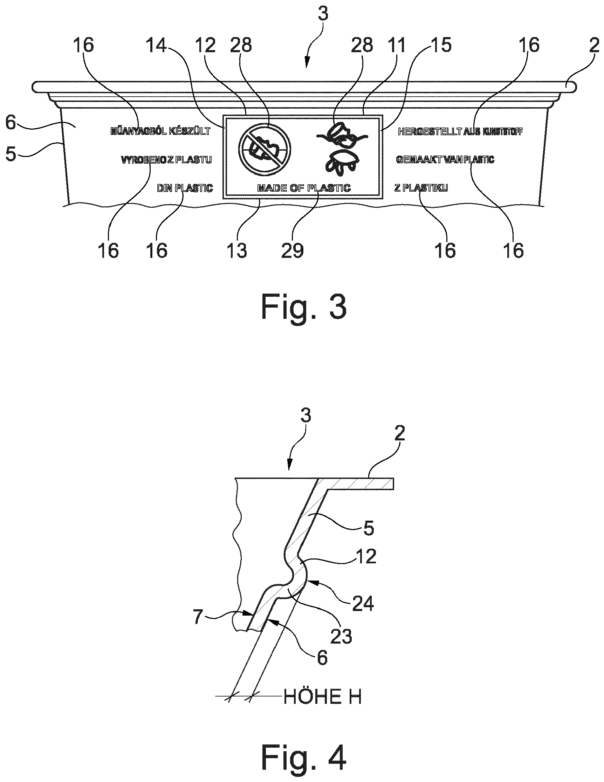

Der Rahmen wird durch einen durch Prägen erzeugten, über andere Teile der Außenoberfläche 6 vorspringenden Wulst 23 gebildet (vgl. Fig. 4). Der Wulst 23 weist eine Scheitellinie 24, die die Form des Rahmens hat. Der auf der Scheitellinie 24 liegende Scheitelpunkt des Wulst ist um eine Höhe H von der durch die Außenoberfläche 6 gebildeten Referenzfläche beabstandet.

Die Wandstärke des oberen Teils 5 liegt in einem Bereich von 200µm bis 600µm.

Das Prägen des Wulst 23 kann dadurch erfolgen, dass in der Innenoberfläche einer Tiefziehform eine Ausnehmung vorgesehen ist und das Material des Bechers 1 durch Aufbringen eines Innendrucks, beispielsweise mittels Druckluft, auf die Innenoberfläche 7 in Anlage mit der Innenoberfläche gebracht und in die Ausnehmung in der Innenoberfläche der Tiefziehform gedrückt wird.

Zwischen dem Zwischenteil 8 und dem Boden 4 sind zwei untere Teile 25, 26 angeordnet. Der untere Teil 25 ist kegelstumpfförmig ausgeführt und verjüngt sich von einem oberen Durchmesser, der näher zum Rand 2 angeordnet ist, zu einem unteren Durchmesser, der näher zum Boden 4 angeordnet ist. Jeder Durchmesser des Zwischenteils 8 ist größer als jeder Durchmesser des unteren Teils 25. Zwischen dem unteren Teil 25 und dem Boden 4 ist der untere Teile 26 angeordnet. Der untere Teil 26 ist kegelstumpfförmig ausgeführt und verbreitert sich von einem oberen Durchmesser, der näher zum Rand 2 angeordnet ist, zu einem unteren Durchmesser, der näher zum Boden 4 angeordnet ist. Zwischen den verschiedenen unteren Teilen 25, 26 und zwischen dem Zwischenteil 8 und dem dem Zwischenteil 8 als nächstes angeordneten unteren Teil 25 sind jeweils Übergänge 27, die im Querschnitt kreisbogenförmig ausgeführt sind, vorgesehen. Zwischen dem oberen Teil 5 und dem Zwischenteil 8 ist ebenfalls ein Übergang 27 vorgesehen, der im Querschnitt kreisbogenförmig ausgeführt ist.

Der Becher 1 ist aus Polyethylenterephthalat (PET) und durchsichtig.

In dem Rahmen sind zwei durch Prägen erzeugte Piktogramme 28 und eine durch Prägen erzeugte Abfolge 29 von Schriftzeichen vorgesehen. Die Abfolge 29 von Schriftzeichen erstreckt sich entlang einer Linie, die eine Umfangslinie des oberen Teils 5 ist.

Auf jeder Seite des Rahmens 1 sind drei Abfolgen 16 von Schriftzeichen vorgesehen; mithin sind insgesamt sechs Abfolgen 16 von Schriftzeichen vorgesehen. Jede Abfolge 16 von Schriftzeichen erstreckt sich entlang einer Linie, die eine Umfangslinie des oberen Teils 5 ist. Die oberste Abfolge 16 von Schriftzeichen auf der linken Seite des Rahmens 11 (Fig. 3) erstreckt sich entlang derselben Umfangslinie wie die oberste Abfolge 16 von Schriftzeichen auf der rechten Seite des Rahmens 11. Die mittlere Abfolge 16 von Schriftzeichen auf der linken Seite des Rahmens 11 (Fig. 3) erstreckt sich entlang derselben Umfangslinie wie die mittlere Abfolge 16 von Schriftzeichen auf der rechten Seite des Rahmens 11. Die unterste Abfolge 16 von Schriftzeichen auf der linken Seite des Rahmens 11 (Fig. 3) erstreckt sich entlang derselben Umfangslinie wie die unterste Abfolge 16 von Schriftzeichen auf der rechten Seite des Rahmens 11.

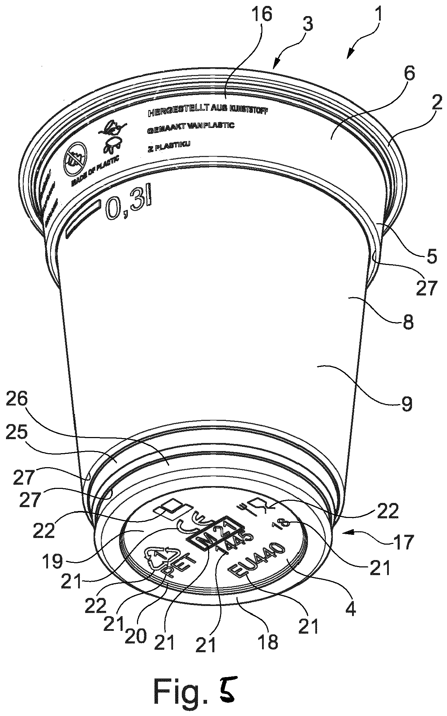

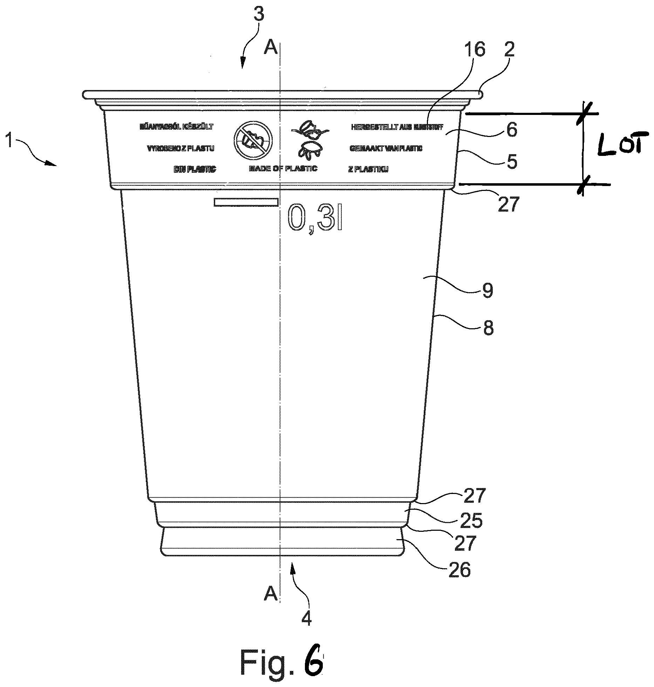

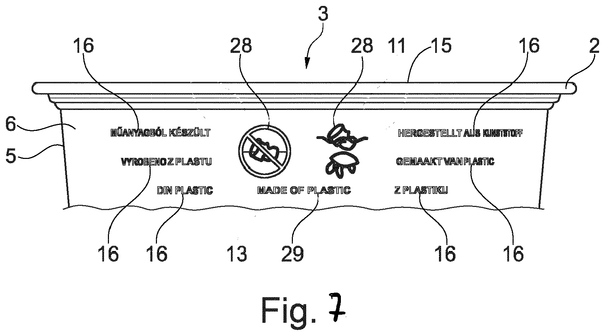

Die Fig. 5 bis 7 zeigen, dass die Vorteile der Erfindung hinsichtlich der Lesbarkeit der Abfolge 16 von Schriftzeichen und der Piktogramme auch realisiert werden können, wenn kein Rahmen im oberen Teil 5 vorgesehen wird.

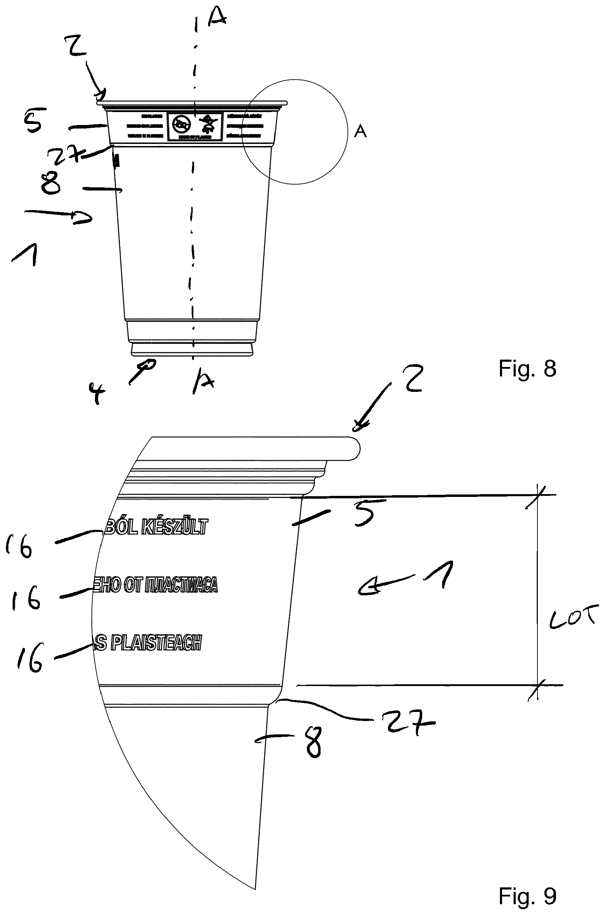

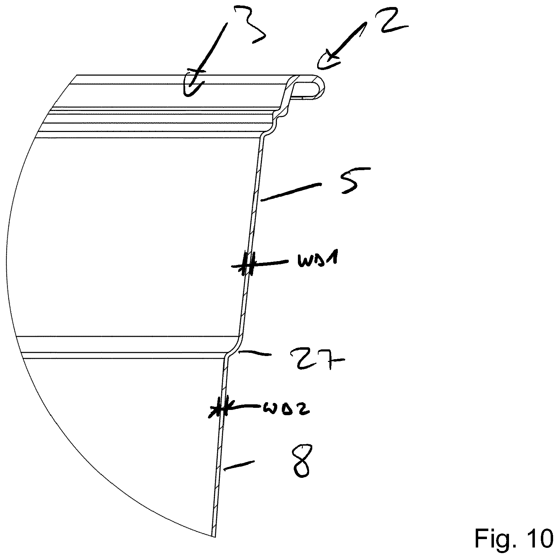

Fig. 8 bis 10 heben hervor, dass zwischen dem oberen Teil 5 und dem Zwischenteil 8 ein Übergang 27 vorgesehen ist, der im Querschnitt kreisbogenförmig ausgeführt ist. In Fig. 10 ist mit "WD1" die Wandstärke des oberen Teils 5 und mit "WD2" die Wandstärke des Zwischenteils 8 gekennzeichnet. Die Wandstärke "WD1" ist - auch wenn das in der Art der Darstellung der Fig. 10 nur bedingt erkennbar ist - größer als die Wandstärke "WD2".

Der Übergang 27 kann in vorteilhafter Weise dazu genutzt werden, das Einstellen der Wandstärken WD1 und WD2 zu erleichtern. Wird das Material des Bechers beim Tiefziehen mit einem ersten außenliegenden Stempel und einer entsprechend geformten Form im Bereich des Übergangs 27 niedergehalten und wird ein zweiter, innenliegender Stempel genutzt, um die für den Zwischenteil 8 benutzten Materialabschnitte tiefzuziehen, so kann durch den außenliegenden Stempel in seinem Zusammenwirken mit einer entsprechend geformten Form die Menge an Material, die beim Tiefziehen aus dem Bereich des oberen Teils 5 in den Bereich des Zwischenteils 8 gezogen wird, reduziert werden. Dadurch bleibt die Wandstärke WD1 des oberen Teils 5 dick, während die Wandstärke des Zwischenteils 8 verhältnismäßig dünner wird.

## Patentansprüche

1. Becher (1) mit
µ einer von einem Rand (2) umgebenen Becheröffnung (3)
µ einem der Becheröffnung (3) gegenüberliegenden Boden (4)
µ einer von der Becheröffnung (3) zum Boden (4) verlaufenden Längsachse (A),
µ einen näher zum Rand (2) als zum Boden (4) angeordneten oberen Teil (5), der eine Außenoberfläche (6) und eine Innenoberfläche (7) aufweist, wobei
µ der obere Teil (6) entweder einen konstanten Durchmesser hat oder der obere Teil (6) kegelstumpfförmig ausgeführt ist und sich von einem oberen Durchmesser zu einem unteren Durchmesser verjüngt,
µ einen zwischen dem oberen Teil (6) und dem Boden (4) angeordneten Zwischenteil (8), der eine Außenoberfläche (9) und eine Innenoberfläche (10) aufweist, wobei
µ der Zwischenteil (8) entweder einen konstanten Durchmesser hat oder der Zwischenteil (8) kegelstumpfförmig ausgeführt ist und sich von einem oberen Durchmesser zu einem unteren Durchmesser verjüngt,
µ wobei jeder Durchmesser des oberen Teils (5) größer ist als jeder Durchmesser des Zwischenteils (8),
**dadurch gekennzeichnet, dass**
• dass an der Außenoberfläche (6) des oberen Teils eine über andere Teile der Außenoberfläche (6) vorspringende Abfolge (16) von Schriftzeichen vorgesehen ist und
• dass zwischen dem oberen Teil (5) und dem Zwischenteil (8) ein Übergang (27) angeordnet ist.

2. Becher nach Anspruch 1, **dadurch gekennzeichnet, dass** an der Außenoberfläche (6) des oberen Teils (5) einen über andere Teile der Außenoberfläche (6) vorspringender Rahmen (11) vorgesehen ist, wobei der Rahmen (11)
• einen oberen, näher zum Rand (2) angeordneten Punkt oder Abschnitt (12) und einen unteren, näher zum Boden (4) angeordneten Punkt oder Abschnitt (13) aufweist und
• in Umfangsrichtung des oberen Teils (5) gesehen einen Startpunkt oder Startabschnitt (14) und einen in Umfangsrichtung zum Startpunkt oder Startabschnitt (14) versetzt angeordneten Endpunkt oder Endabschnitt (15) aufweist, wobei der Winkel zwischen einer ersten Radialen des oberen Teils, die durch den Startpunkt oder Startabschnitt (14) verläuft, und einer zweiten Radialen, die durch den Endpunkt oder den Endabschnitt (15) verläuft, kleiner ist als 90°
• wobei die über andere Teile der Außenoberfläche (6) vorspringende Abfolge (16) von Schriftzeichen an der Außenoberfläche (6) des oberen Teils und benachbart zum Rahmen (11) vorgesehen ist.

3. Becher nach Anspruch 1 oder 2, **dadurch gekennzeichnet, dass** der Becher (1) durch Tiefziehen und die Abfolge (16) der Schriftzeichen durch ein Prägen hergestellt wurden, insbesondere der Becher (1) durch Tiefziehen und die Abfolge (16) der Schriftzeichen und der Rahmen (11) durch ein Prägen hergestellt wurden.

4. Becher nach einem der Ansprüche 1 bis 3, **dadurch gekennzeichnet, dass** die dünnste Wandstärke des oberen Teils (5) gleich oder dicker ist als die dickste Wandstärke des Zwischenteils (8).

5. Becher nach einem der Ansprüche 1 bis 4, **dadurch gekennzeichnet, dass** an der Innenoberfläche (7) des oberen Teils (5) ein gegenüber anderen Teilen der Innenoberfläche (7) zurückspringender Rahmen (11) vorgesehen ist, wobei der Rahmen (11)
∘ einen oberen, näher zum Rand (2) angeordneten Punkt oder Abschnitt (12) und einen unteren, näher zum Boden (4) angeordneten Punkt oder Abschnitt (13) aufweist und
∘ in Umfangsrichtung des oberen Teils (5) gesehen einen Startpunkt oder Startabschnitt (14) und einen in Umfangsrichtung zum Startpunkt oder Startabschnitt (14) versetzt angeordneten Endpunkt oder Endabschnitt (15) aufweist, wobei der Winkel zwischen einer ersten Radialen des oberen Teils, die durch den Startpunkt oder Startabschnitt (14) verläuft, und einer zweiten Radialen, die durch den Endpunkt oder den Endabschnitt (15) verläuft, kleiner ist als 90°,
und/oder dass an der Innenoberfläche (7) des oberen Teils (5) und benachbart zum Rahmen (11) eine gegenüber anderen Teilen der Innenoberfläche (7) zurückspringende Abfolge (16) von Schriftzeichen vorgesehen ist.

6. Becher nach einem der Ansprüche 1 bis 5, **gekennzeichnet durch** einen zwischen dem Zwischenteil (8) und dem Boden (4) angeordneten unteren Teil (25), der eine Außenoberfläche und eine Innenoberfläche aufweist, wobei
µ der untere Teil (25) entweder einen konstanten Durchmesser hat oder der untere Teil (25) kegelstumpfförmig ausgeführt ist und sich von einem oberen Durchmesser zu einem unteren Durchmesser verjüngt,
µ wobei jeder Durchmesser des Zwischenteils (8) größer ist als jeder Durchmesser des unteren Teils (25).

7. Becher nach einem der Ansprüche 1 bis 6, **dadurch gekennzeichnet, dass** der Becher (1) aus Polyethylenterephthalat hergestellt wurde, wobei das Polyethylenterephthalat zwischen 0% und 100% recyclierte Anteile aufweisen kann.

8. Becher nach einem der Ansprüche 1 bis 7, **dadurch gekennzeichnet, dass** an der Außenoberfläche (6) des oberen Teils (5) in dem Rahmen (11) ein über andere Teile der Außenoberfläche vorspringendes Piktogramm (28) vorgesehen ist und/oder an der Außenoberfläche (6) des oberen Teils (11) in dem Rahmen ein über andere Teile der Außenoberfläche vorspringende Abfolge (29) von Schriftzeichen vorgesehen ist.

9. Becher nach einem der Ansprüche 1 bis 8, **gekennzeichnet durch**
• eine erste sich entlang einer Line erstreckende Abfolge (16) von Schriftzeichen, die an der Außenoberfläche (6) des oberen Teils (5) und benachbart zum Rahmen (11) vorgesehen ist und
• eine zweite sich entlang einer Line erstreckende Abfolge (16) von Schriftzeichen, die an der Außenoberfläche (6) des oberen Teils (5) und benachbart zum Rahmen (11) vorgesehen ist.

10. Becher nach Anspruch 1 oder nach einem der Ansprüche 3, 4, 5, 6, 7 soweit auf Anspruch 1 rückbezogen, **dadurch gekennzeichnet, dass** an der Außenoberfläche (6) des oberen Teils (5) kein über andere Teile der Außenoberfläche (6) vorspringender Rahmen (11) vorgesehen ist, insbesondere kein Rahmen (11), der
• einen oberen, näher zum Rand (2) angeordneten Punkt oder Abschnitt (12) und einen unteren, näher zum Boden (4) angeordneten Punkt oder Abschnitt (13) aufweist und
• in Umfangsrichtung des oberen Teils (5) gesehen einen Startpunkt oder Startabschnitt (14) und einen in Umfangsrichtung zum Startpunkt oder Startabschnitt (14) versetzt angeordneten Endpunkt oder Endabschnitt (15) aufweist, wobei der Winkel zwischen einer ersten Radialen des oberen Teils, die durch den Startpunkt oder Startabschnitt (14) verläuft, und einer zweiten Radialen, die durch den Endpunkt oder den Endabschnitt (15) verläuft, kleiner ist als 90°.

11. Verfahren zum Herstellen eines Bechers nach einem der Ansprüche 1 bis 10, **dadurch gekennzeichnet, dass** der Becher (1) durch Tiefziehen hergestellt wird und der die Abfolge (16) von Schriftzeichen dadurch erzeugt wird, dass auf die Innenoberfläche (7) des oberen Teils gedrückt wird, insbesondere der Becher (1) durch Tiefziehen hergestellt wird und der Rahmen (11) und die Abfolge (16) von Schriftzeichen dadurch erzeugt wird, dass auf die Innenoberfläche (7) des oberen Teils gedrückt wird.

12. Verfahren nach Anspruch 11, **dadurch gekennzeichnet, dass** zum Tiefziehen des Bechers (1) eine Tiefziehform verwendet wird, die einen Absatz aufweist, wobei beim Tiefziehen der obere Teil (5) oberhalb des Absatzes gebildet wird und der Zwischenteil (8) unterhalb des Absatzes gebildet wird.

13. Verfahren nach Anspruch 11 oder 12, **dadurch gekennzeichnet, dass** die Tiefziehform auf ihrer Innenoberfläche Ausnehmungen aufweist und der Becher (1) mit einem Tiefziehstempel in der Tiefziehform vorgeformt wird und dass zur Bildung des Rahmens (11) und/oder der Abfolge (16) von Schriftzeichen ein Fluid mit Überdruck in den vorgeformten Becher (1) eingebracht wird und das Material des vorgeformten Bechers (1) in die Ausnehmung drückt.
